# FASCICULE DE BREVET EUROPEEN

(11) **EP 2 322 407 B1**
(45) Date de publication et mention de la délivrance du brevet: **26.06.2013**
(21) Numéro de dépôt: 10306264.2
(22) Date de dépôt: 16.11.2010
(51) Int. Cl.: B62D 1/184

(54) **Dispositif perfectionné de verrouillage en position d'une colonne de direction réglable de véhicule automobile**
Verbesserte Positionsverriegelungsvorrichtung einer verstellbaren Lenksäule eines Kraftfahrzeugs
Improved device for locking in position an adjustable steering column of a vehicle

(30) Priorité: 17.11.2009 FR 0958094
(43) Date de publication de la demande: 18.05.2011
(73) Titulaire: Fuji Autotech France SAS, 25350 Mandeure (FR)
(72) Inventeur: Lidoine, Eric, 25700 Mathay (FR)
(74) Mandataire: Blot, Philippe Robert Emile

(56) Documents cités:
- EP-A1- 1 681 223
- EP-A2- 1 747 966
- JP-A- 2005 193 745

## Description

La présente invention concerne un dispositif de verrouillage en position d'une colonne de direction réglable de véhicule automobile.

Un véhicule automobile comporte habituellement un volant réglable en hauteur, notamment pour des raisons de confort du conducteur. A cet effet, le volant est porté par une colonne de direction apte à pivoter autour d'un axe prédéterminé, perpendiculaire à une direction longitudinale de cette colonne.

Afin que le volant reste en position après avoir été réglé en hauteur, la colonne de direction est munie d'un dispositif de verrouillage.

On connaît déjà dans l'état de la technique, notamment d'après EP 1 681 223, un tel dispositif de verrouillage en position de la colonne, du type comprenant :
- des premier et second flasques espacés de façon à définir entre eux un passage de réception de la colonne de direction,
- un tirant s'étendant longitudinalement selon un axe traversant perpendiculairement les premier et second flasques, et prenant appui sur le premier flasque par une première extrémité, le tirant étant reçu dans des première et seconde lumières ménagées respectivement dans les premier et second flasques pour permettre le réglage en position de la colonne de direction par déplacement du tirant dans les lumières, et
- des moyens de serrage comprenant une came mobile, portée par une seconde extrémité du tirant, et une surface complémentaire d'appui portée par le second flasque, telles que la came et la surface d'appui coopèrent et sont mobiles l'un par rapport à l'autre, en rotation autour de l'axe du tirant et axialement le long du tirant, entre une position axialement écartée de verrouillage de la colonne de direction par serrage des premier et second flasques et une position axialement rapprochée de libération de la colonne de direction par relâchement des premier et second flasques.

Dans ce dispositif de verrouillage, la came est solidaire d'un levier destiné à être manipulé par le conducteur lorsqu'il souhaite libérer ou verrouiller la colonne de direction en position. Afin de limiter les débattements du levier et de la came, on prévoit des butées de fin de courses complémentaires ménagées sur le second flasque et sur le levier.

Ces butées imposent des contraintes de forme au second flasque et au levier, ces contraintes étant parfois incompatibles avec l'environnement de la colonne de direction.

L'invention a notamment pour but de remédier à cet inconvénient en fournissant un dispositif de verrouillage dont la limitation des débattements du levier et de la came n'impose pas de contrainte de forme au second flasque et au levier, tout en possédant une structure simple et économique.

A cet effet, la présente invention a notamment pour objet un dispositif de verrouillage du type précité, caractérisé en ce que la came comporte au moins une butée angulaire de verrouillage, destinée à coopérer avec un bord délimitant la lumière du second flasque lorsque la came est en position de verrouillage.

La butée angulaire permet de limiter les déplacements angulaires de la came. Cette butée angulaire étant directement portée par la came, et coopérant directement avec un bord de la lumière du second flasque en position de verrouillage, elle n'impose aucune contrainte de forme au second flasque, ni à un levier portant la came.

En outre, cette butée angulaire est simple à mettre en oeuvre et relativement économique.

De préférence, le dispositif de verrouillage selon l'invention comporte l'une ou plusieurs des caractéristiques suivantes, prise seule ou en combinaison :
- la came comporte au moins une butée angulaire de libération, destinée à coopérer avec le bord délimitant la lumière du second flasque lorsque la came est en position de libération,
- la came présente une surface de came présentant au moins une saillie formée sur une face orientée vers le second flasque,
- la surface de came est conformée pour s'emboîter dans la lumière du second flasque en position rapprochée de libération,
- la saillie de la came a une forme de rampe s'étendant entre un dénivelé, formant point dur lorsque la came est en position de libération, et la butée angulaire de verrouillage,
- la came est venue de matière avec le tirant, et
- le dispositif de verrouillage comprend un levier d'actionnement portant la came, actionnable en rotation autour de l'axe du tirant, le levier d'actionnement étant réalisé en matière plastique et étant surmoulé sur le tirant.

L'invention concerne également un ensemble de colonnes de direction comprenant une colonne de direction réglable et un dispositif de verrouillage tel que défini précédemment.

L'invention sera mieux comprise à la lecture de la description qui va suivre, donnée uniquement à titre d'exemple et faite en se référant aux figures annexées dans lesquelles :
- la figure 1 est une vue partielle en perspective d'une colonne de direction réglable comprenant un dispositif de verrouillage selon un exemple de mode de réalisation de l'invention ;
- la figure 2 est une vue en perspective du dispositif de verrouillage de la colonne de direction de la figure 1 ;
- la figure 3 est une vue en coupe longitudinale du dispositif de verrouillage de la figure 2, dans lequel la came est en position de verrouillage ;
- la figure 4 est une vue similaire à la figure 3 du dispositif de verrouillage de la figure 2, dans lequel la came est en position de libération ;

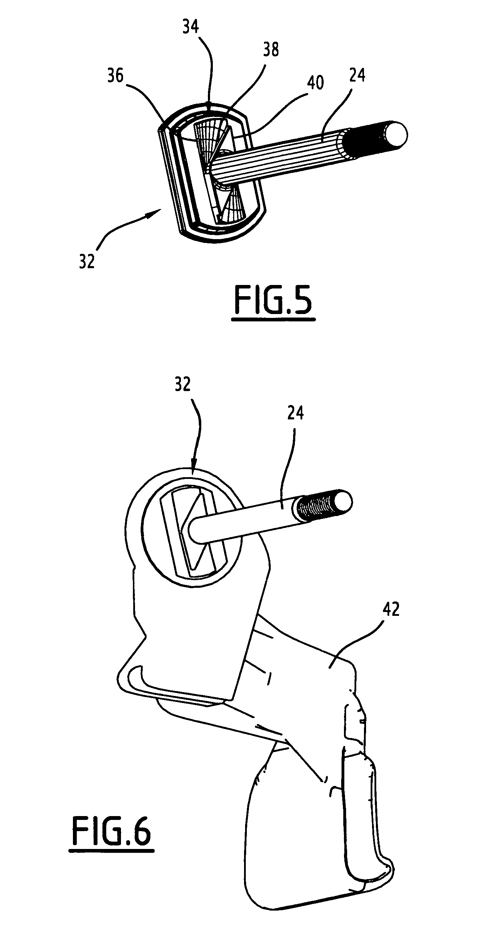

- la figure 5 est une vue en perspective d'une came du dispositif de verrouillage de la figure 2 ; et
- la figure 6 est une vue en perspective d'un levier du dispositif de verrouillage de la figure 2, portant la came de la figure 5.

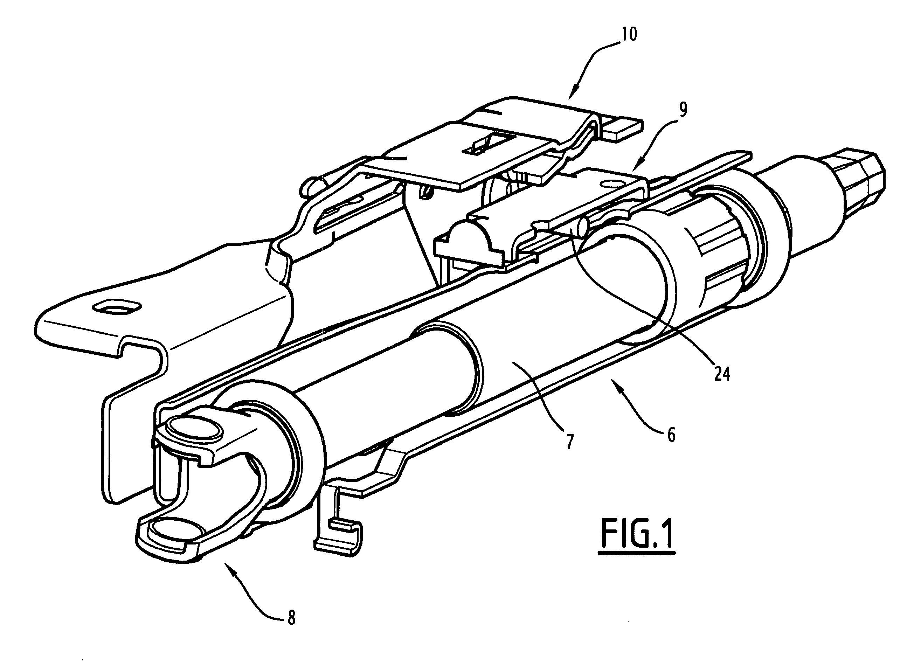

On a représenté sur la figure 1 un ensemble de colonne de direction 6 de véhicule automobile.

La colonne de direction 6 comporte un arbre de direction 7 télescopique, de forme générale de révolution autour d'un axe longitudinal, destiné à être relié cinématiquement, d'une part, à un volant (non représenté) du véhicule et, d'autre part, à un joint de Cardan 8. On rappelle qu'un joint de Cardan est un dispositif mécanique permettant le couplage de deux arbres dont les axes géométriques concourent en un même point.

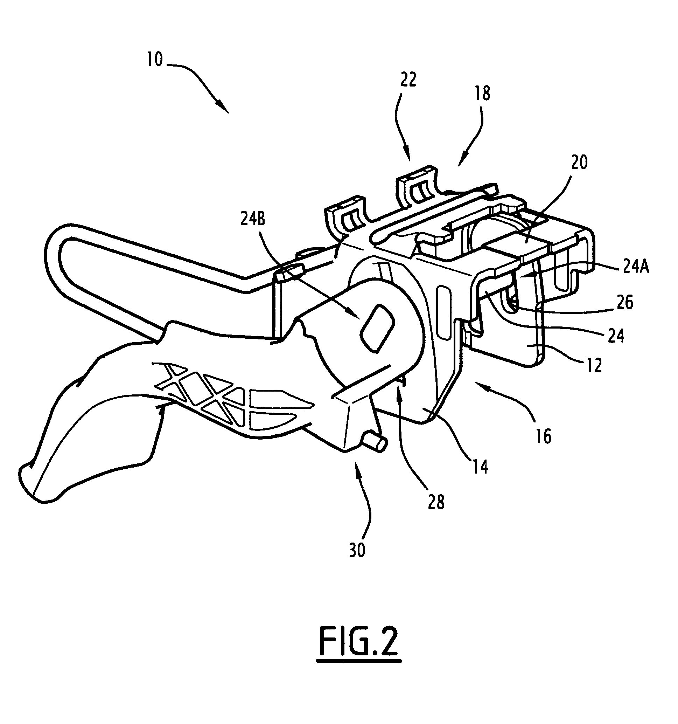

La colonne de direction 6 est réglable en hauteur, en particulier par l'intermédiaire d'un organe de liaison 9, solidaire avec la colonne de direction 6, coopérant avec un dispositif 10 de verrouillage en position de la colonne de direction 6. Ce dispositif de verrouillage 10 est représenté plus en détail sur les figures 2 à 4.

Le dispositif de verrouillage 10 comporte des premier 12 et second 14 flasques espacés parallèlement l'un à l'autre de façon à définir entre eux un passage de réception 16 pour la colonne de direction 6.

Les flasques 12 et 14 forment des ailes latérales d'une bride 18 en forme de U inversé présentant une âme centrale 20 munie de moyens de fixation 22 sur un élément de structure du véhicule automobile, par exemple sur un tableau de bord (non représenté) de ce véhicule automobile.

Le dispositif de verrouillage 10 comporte un tirant 24 s'étendant longitudinalement selon un axe traversant perpendiculairement les premier 12 et second 14 flasques, et prenant appui sur le premier flasque 12 par une première extrémité 24A, par exemple au moyen d'une rondelle d'appui et d'une tête (non représentée) du tirant 24.

Les premier 12 et second 14 flasques comprennent respectivement des première 26 et seconde 28 lumières, à travers lesquelles passe le tirant 24. Chaque lumière 26, 28 présente un profil oblong allongé selon un arc de cercle, destiné à guider le déplacement de la colonne de direction 6.

Par ailleurs, l'organe de liaison 9 comporte au moins une lumière (non représentée) allongée selon une direction sensiblement parallèle à la direction de la colonne de direction 6, dans laquelle est logée le tirant 24. Ainsi, le tirant 24 relie la colonne de direction 6 aux flasques 12, 14. La colonne de direction 6 peut alors être réglée en hauteur par déplacement du tirant 24 dans les lumières allongées 26, 28 des flasques 12, 14 et dans les lumières allongées de l'organe de liaison 9.

Afin de verrouiller la colonne de direction 6 en position, le dispositif de verrouillage 10 comporte des moyens 30 de serrage des premier 12 et second 14 flasques l'un vers l'autre.

Les moyens de serrage 30 comportent une came mobile 32, portée par une seconde extrémité 24B du tirant 24, destinée à coopérer avec une surface complémentaire d'appui portée par sur le second flasque 14. Conformément à l'exemple de mode de réalisation représenté, la came 32 est venue de matière avec le tirant 24, et la surface d'appui est formée par une surface du second flasque 14, tournée vers la came 32.

La came 32 et la surface d'appui sont mobiles l'une par rapport à l'autre, en rotation autour de l'axe du tirant 24, et axialement le long du tirant 24, entre une position axialement écartée de verrouillage de la colonne de direction par serrage des premier 12 et second 14 flasques et une position axialement rapprochée de libération de la colonne de direction par relâchement des premier 12 et second 14 flasques.

A cet effet, la came 32 présente une surface de came présentant au moins une saillie 34 formée sur une face orientée vers le second flasque 14. La saillie 34 a une forme de rampe s'étendant entre un dénivelé 36 et une butée angulaire de verrouillage 38.

La butée angulaire de verrouillage 38 est destinée à coopérer avec un bord délimitant la lumière 28 du second flasque 14, lorsque la came 32 est en position de verrouillage, comme cela est représenté sur la figure 2.

La came 32 comporte également une butée angulaire de libération 40, destinée à coopérer avec le bord délimitant la lumière 28 du second flasque 14 lorsque la came 32 est en position de libération.

On notera que la surface de la came 32 est conformée pour s'emboîter dans la lumière 28 du second flasque 14 en position de libération. A cet effet, le dénivelé 36 et la butée angulaire de libération 40 sont sensiblement parallèles, et sont écartés par une distance inférieure à la largeur de la lumière 28.

Avantageusement, la came 32 comporte deux butées de verrouillage 38, deux rampes et deux butées de libération 40, disposées symétriquement par rapport à l'axe du tirant 24.

Afin d'actionner les rotations de la came 32, le dispositif de verrouillage 10 comporte un levier d'actionnement 42 solidaire de cette came 32, et actionnable en rotation autour de l'axe du tirant 24. De préférence, le levier d'actionnement 42 est réalisé en matière plastique surmoulée sur le tirant 24, en particulier autour de la came 32. En variante, le levier d'actionnement 42 est relié au tirant 24 par tout autre moyen de solidarisation, par exemple par encliquetage ou en étant venu de matière avec ce tirant 24.

Le levier d'actionnement 42, le tirant 24 et la came 32 étant solidaires, ils forment un organe monobloc qui est directement rapporté dans le dispositif de verrouillage 10. Il en résulte une simplicité de montage.

Le fonctionnement du dispositif de verrouillage 10 sera décrit ci-dessous.

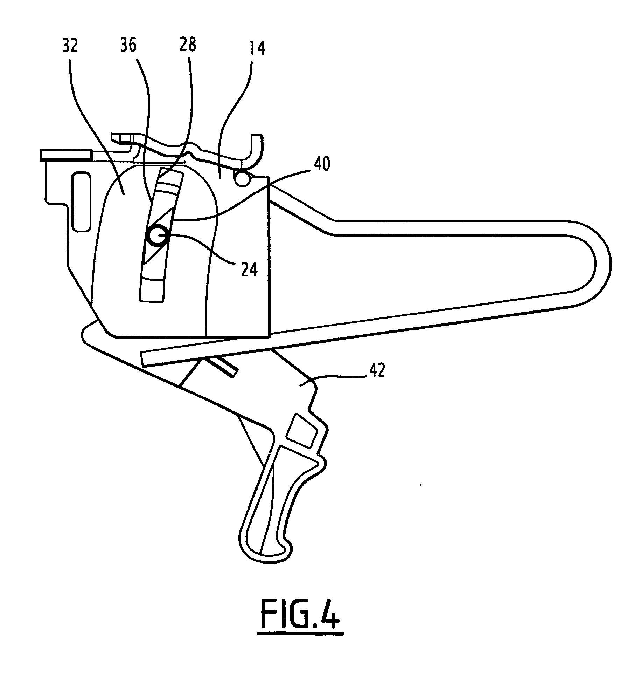

En position de libération, telle que représentée sur la figure 4, la surface de came 32 est escamotée dans la lumière 28. La came 32 n'impose alors pas de serrage aux flasques 12 et 14. L'organe de liaison 9 n'est donc pas enserré, et la colonne de direction 8 est libre, ce qui permet son réglage en hauteur.

Dans cette position de libération, chaque butée angulaire de libération 40 coopère avec le bord de la lumière 18, de façon à empêcher la rotation de la came dans un premier sens de rotation.

Par ailleurs, chaque dénivelé 36 coopère également avec le bord de la seconde lumière 28, de façon à former un point dur dans un second sens de rotation, opposé au premier.

Lorsque l'utilisateur fait tourner la came 32, par l'intermédiaire du levier 42, dans le second sens de rotation, la rampe de la surface de came 32 coopère avec la seconde flasque 14, ce qui a pour effet de rapprocher peu à peu cette seconde flasque 14 de la première flasque 12, enserrant ainsi l'organe de liaison 9 entre les premier 12 et second 14 flasques.

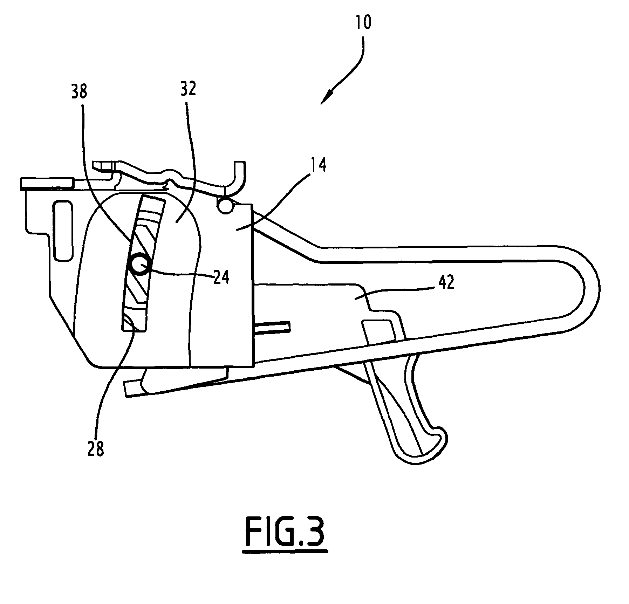

La rotation dans le second sens est possible jusqu'à ce que chaque butée de verrouillage 38 vienne en butée contre le bord de la seconde lumière 28. La came 32 se trouve alors en position de verrouillage, telle que représentée sur la figure 3, dans laquelle le serrage de l'organe de liaison 9 entre les premier 12 et second 14 flasques est maximal. La colonne de direction 6 est ainsi immobilisée en hauteur.

On notera que l'invention n'est pas limitée au mode de réalisation précédemment décrit et pourrait présenter diverses variantes rentrant dans le cadre des revendications.

## Revendications

1. Dispositif (10) de verrouillage en position d'une colonne de direction (6) réglable de véhicule automobile, du type comprenant :
- des premier (12) et second (14) flasques espacés de façon à définir entre eux un passage (16) de réception de la colonne de direction (6),
- un tirant (24) s'étendant longitudinalement selon un axe traversant perpendiculairement les premier (12) et second (14) flasques, et prenant appui sur le premier flasque (12) par une première extrémité (24A), le tirant étant reçu dans des première (26) et seconde (28) lumières ménagées respectivement dans les premier (12) et second (14) flasques pour permettre le réglage en position de la colonne de direction (6) par déplacement du tirant (24) dans les lumières (26, 28), et
- des moyens de serrage (30) comprenant une came mobile (32), portée par une seconde extrémité (24B) du tirant (24), et une surface complémentaire d'appui portée par le second flasque (14), telles que la came (32) et la surface d'appui coopèrent et sont mobiles l'un par rapport à l'autre, en rotation autour de l'axe du tirant (24) et axialement le long du tirant (24), entre une position axialement écartée de verrouillage de la colonne de direction (6) par serrage des premier (12) et second (14) flasques et une position axialement rapprochée de libération de la colonne de direction (6) par relâchement des premier (12) et second (14) flasques,
**caractérisé en ce que** la came (32) comporte au moins une butée angulaire de verrouillage (38), destinée à coopérer avec un bord délimitant la lumière (28) du second flasque (14) lorsque la came (32) est en position de verrouillage.

2. Dispositif de verrouillage (10) selon la revendication 1, dans lequel la came (32) comporte au moins une butée angulaire de libération (40), destinée à coopérer avec le bord délimitant la lumière (28) du second flasque (14) lorsque la came (32) est en position de libération.

3. Dispositif de verrouillage (10) selon la revendication 1 ou 2, dans lequel la came (32) présente une surface de came présentant au moins une saillie (34) formée sur une face orientée vers le second flasque (14).

4. Dispositif de verrouillage (10) selon la revendication 3, dans lequel la surface de came (34) est conformée pour s'emboîter dans la lumière (28) du second flasque (14) en position rapprochée de libération.

5. Dispositif de verrouillage (10) selon la revendication 4, dans lequel la saillie (34) de la came (32) a une forme de rampe s'étendant entre un dénivelé (36), formant point dur lorsque la came (32) est en position de libération, et la butée angulaire de verrouillage (38).

6. Dispositif de verrouillage (10) selon l'une quelconque des revendications précédentes, dans lequel la came (32) est venue de matière avec le tirant (24).

7. Dispositif de verrouillage (10) selon la revendication 6, comportant un levier d'actionnement (42) portant la came (32), actionnable en rotation autour de l'axe du tirant (24), le levier d'actionnement (42) étant réalisé en matière plastique et étant surmoulé sur le tirant (24).

8. Ensemble de colonne de direction comprenant une colonne de direction (6) réglable en hauteur et un dispositif de verrouillage (10) selon l'une quelconque des revendications précédentes.

## Patentansprüche

1. Vorrichtung (10) zum Verriegeln einer verstellbaren Lenksäule (6) eines Kraftfahrzeugs in Position, des Typs, der aufweist:
einen ersten (12) und einen zweiten (14) Flansch, die im Abstand voneinander angeordnet sind, so dass sie zwischen einander einen Durchgang (16) zum Aufnehmen der Lenksäule (6) definieren,
eine Zugstange (24), die sich längs entlang einer den ersten (12) und den zweiten (14) Flansch senkrecht durchquerenden Achse erstreckt und mit einem ersten Ende (24A) an dem ersten Flansch (12) abgestützt ist, wobei die Zugstange in einer ersten (26) und einer zweiten (28) Öffnung aufgenommen ist, die jeweils in dem ersten (12) und dem zweiten (14) Flansch eingerichtet sind, um das Positionsverstellen der Lenksäule (6) durch Verlagern der Zugstange (24) in den Öffnungen (26, 28) zu ermöglichen, und
Einspannmittel (30), aufweisend einen bewegbaren Nocken (32), der von einem zweiten Ende (24B) der Zugstange (24) getragen wird, und eine komplementäre Stützfläche, die von dem zweiten Flansch (14) getragen wird, so dass der Nocken (32) und die Stützfläche drehbar um die Achse der Zugstange (24) und axial entlang der Zugstange (24) zwischen einer axial entfernten Position zum Verriegeln der Lenksäule (6) durch Einspannen des ersten (12) und des zweiten (14) Flansches, und einer axial angenäherten Position zum Lösen der Lenksäule (6) durch Freigeben des ersten (12) und des zweiten (14) Flansches zusammenwirken und bezüglich einander bewegbar sind,
**dadurch gekennzeichnet, dass** der Nocken (32) mindestens einen winkelförmigen Verriegelungsanschlag (38) aufweist, der vorgesehen ist, um mit einem Rand zusammenzuwirken, der die Öffnung (28) des zweiten Flansches (14) begrenzt, wenn sich der Nocken (32) in der Verriegelungsposition befindet.

2. Verriegelungsvorrichtung (10) gemäß Anspruch 1, wobei der Nocken (32) mindestens einen winkelförmigen Löse-Anschlag (40) aufweist, der vorgesehen ist, um mit dem Rand zusammenzuwirken, der die Öffnung (28) des zweiten Flansches (14) begrenzt, wenn sich der Nocken (32) in der Löseposition befindet.

3. Verriegelungsvorrichtung (10) gemäß Anspruch 1 oder 2, wobei der Nocken (32) eine Nockenfläche aufweist, die mindestens einen Vorsprung (34) aufweist, der an einer Seite ausgebildet ist, die in Richtung zu dem zweiten Flansch (14) ausgerichtet ist.

4. Verriegelungsvorrichtung (10) gemäß Anspruch 3, wobei die Nockenfläche (34) angepasst ist, um in der angenäherten Löseposition in die Öffnung (28) des zweiten Flansches (14) zu passen.

5. Verriegelungsvorrichtung (10) gemäß Anspruch 4, wobei der Vorsprung (34) des Nockens (32) eine Rampenform hat, die sich zwischen einer Abstufung (36), die einen harten Punkt bildet, wenn sich der Nocken (32) in der Löseposition befindet, und dem winkelförmigen Verriegelungsanschlag (38) erstreckt.

6. Verriegelungsvorrichtung (10) gemäß irgendeinem der vorhergehenden Ansprüche, wobei der Nocken (32) aus einem Material mit der Zugstange (24) ist.

7. Verriegelungsvorrichtung (10) gemäß Anspruch 6, die einen den Nocken (32) tragenden Betätigungshebel (42) aufweist, der drehbar um die Achse der Zugstange (24) betätigbar ist, wobei der Betätigungshebel (42) aus Kunststoff hergestellt ist und an die Zugstange (24) angeformt ist.

8. Lenksäuleneinheit, die eine höhenverstellbare Lenksäule (6) und eine Verriegelungsvorrichtung (10) gemäß irgendeinem der vorhergehenden Ansprüche aufweist.

## Claims

1. Device (10) for locking in position an adjustable steering column (6) of an automotive vehicle, of the type comprising:
- first (12) and second (14) flanges spaced apart so as to define a passage (16) between them for receiving the steering column (6),
- a tie rod (24) extending longitudinally along an axis extending perpendicularly through the first (12) and second (14) flanges and supported on the first flange (12) by a first end (24A), the tie rod being received in first (26) and second (28) apertures disposed respectively in the first (12) and second (14) flanges to enable the position of the steering column (6) to be adjusted by displacing the tie rod (24) in the apertures (26, 28), and
- locking means (30) comprising a movable cam (32) borne by a second end (24B) of the tie rod (24), and a complementary support surface borne by the second flange (14) so that the cam (32) and support surface co-operate and are movable relative to one another in rotation about the axis of the tie rod (24) and axially along the tie rod (24) between an axially spaced position locking the steering column (6) by clamping the first (12) and second (14) flanges and an axially closed position releasing the steering column (6) by releasing the first (12) and second (14) flanges, **characterised in that** the cam (32) has at least one angular locking stop (38) designed to co-operate with an edge bounding the aperture (28) of the second flange (14) when the cam (32) is in the locking position.

2. Locking device (10) as claimed in claim 1, in which the cam (32) has at least one angular releasing stop (40) designed to co-operate with the edge bounding the aperture (28) of the second flange (14) when the cam (32) is in the releasing position.

3. Locking device (10) as claimed in claim 1 or 2, in which the cam (32) has a cam surface having at least one projection (34) formed on a surface oriented towards the second flange (14).

4. Locking device (10) as claimed in claim 3, in which the cam surface (34) is shaped so as to nest in the aperture (28) of the second flange (14) in the closed releasing position.

5. Locking device (10) as claimed in claim 4, in which the projection (34) of the cam (32) has the shape of a ramp extending between a change in height (36) constituting a friction point when the cam (32) is in the releasing position and the angular locking stop (38).

6. Locking device (10) as claimed in any one of the preceding claims, in which the cam (32) is made integrally with the material of the tie rod (24).

7. Locking device (10) as claimed in claim 6, comprising an activating lever (42) bearing the cam (32), which can be activated so as to rotate about the axis of the tie rod (24), the activating lever (42) being made from plastic material and being moulded onto the tie rod (24).

8. Steering column assembly comprising a height-adjustable steering column (6) and a locking device (10) as claimed in any one of the preceding claims.
